# EUROPEAN PATENT APPLICATION

(11) **EP 4 793 143 A1**
(43) Date of publication of application: **19.08.2026**
(21) Application number: 26153969.6
(22) Date of filing: 26.01.2026
(51) Int. Cl.: B62D 25/02, B62D 25/04, B62D 27/02, B62D 21/15, B62D 25/20

(54) **LOWER VEHICLE-BODY STRUCTURE FOR VEHICLE**

(30) Priority: 14.02.2025 JP 2025022052
(71) Applicant: MAZDA MOTOR CORPORATION, Hiroshima 730-8670 (JP)
(72) Inventor: Kamemoto, Eiji, Aki-gun, Hiroshima, 730-8670 (JP); Tsukamoto, Hideyuki, Aki-gun, Hiroshima, 730-8670 (JP)
(74) Representative: Lorenz Seidler Gossel Part. mbB

(57) **Abstract**

[Problem] To provide a lower vehicle-body structure for a vehicle, the lower vehicle-body structure being capable of transmitting, to a side sill, a load input from the front side of a vehicle body in a SORB test or the like.

[Means for Solution] A lower vehicle-body structure for a vehicle 1 includes: a floor panel 4; side sills 6 extending in a vehicle body front-rear direction at both ends of the floor panel 4 in a vehicle-body width direction; hinge pillars 7 connected to the side sills 6 and extending in an up-down direction at front ends of the side sills 6; and reinforcements 65 extending in the vehicle body front-rear direction in the side sills 6, and fastened to the hinge pillars 7 via fastening members 66.

## Description

### [Technical Field]

The present invention relates to a lower vehicle-body structure for a vehicle.

### [Background Art]

Patent Literature 1 discloses a lower vehicle-body structure for a vehicle that includes side sill reinforcements disposed in side sills which extend in a front-rear direction at a lower portion of a vehicle body, the side sill reinforcements having closed cross-sections that are arranged in a vehicle-body width direction and extend in the front-rear direction. The main purpose of the side sill reinforcement disclosed in Patent Literature 1 is to promote absorption of a load input from a lateral side of the vehicle body.

A load that is possibly input to a vehicle body can be input from the front side of the vehicle body in a state of overlapping with a portion of the vehicle body in a vehicle-body width direction, such as in a side overlap rigid barrier (SORB) test, for example.

### [Citation List]

### [Patent Literature]

[Patent Literature 1] U. S. Patent No. 2024-051612

### [Summary of Invention]

### [Problem to be Solved by the Invention]

The front end of the side sill reinforcement of Patent Literature 1 terminates in the side sill. Hence, a load input to the vehicle body from the front side of the vehicle body in a SORB test or the like cannot be transmitted to the side sill. Accordingly, there is room for improvement.

It is an object of the present invention to provide a lower vehicle-body structure for a vehicle that is capable of transmitting, to a side sill, a load input from the front side of a vehicle body in a SORB test or the like.

### [Means for Solving the Problem]

One aspect of the present invention is directed to a lower vehicle-body structure for a vehicle, the lower vehicle-body structure including: a floor panel; side sills extending in a vehicle body front-rear direction at both ends of the floor panel in a vehicle-body width direction; hinge pillars connected to the side sills, and extending in an up-down direction at front ends of the side sills; and a reinforcement extending in the vehicle body front-rear direction in each of the side sills, and fastened to each of the hinge pillars via a fastening member.

According to the present invention, since the reinforcement is fastened to the hinge pillar, an impact load that is input to the hinge pillar in a SORB test or the like can be transmitted to the side sill via the reinforcement and the fastening member. As a result, the impact load input to the hinge pillar can be distributed among the reinforcement, the fastening member, and the side sill, thereby suppressing deformation of the vehicle cabin interior that may be caused by rearward movement of the hinge pillar.

### [Advantageous Effect of Invention]

According to the lower vehicle-body structure for a vehicle of the present invention, it is possible to transmit, to the side sill, a load input from the front side of the vehicle body in a SORB test or the like.

### [Brief Description of Drawings]

FIG. 1 is a plan view showing a lower vehicle-body structure for a vehicle according to an embodiment of the present invention.
FIG. 2 is a perspective view of the vehicle as viewed from the rear inner side of a vehicle cabin.
FIG. 3 is a side view of the vehicle with a body side panel and a hinge pillar outer portion not illustrated.
FIG. 4 is a side view of the vehicle with the body side panel illustrated.
FIG. 5 is an enlarged perspective view of a reinforcement member and an area around the reinforcement member.
FIG. 6 is a partial enlarged cross-sectional view taken along line VI-VI in FIG. 3.
FIG. 7 is a partial enlarged perspective view of a second reinforcement member shown in FIG. 2 and an area around the second reinforcement member.
FIG. 8 is a partial enlarged perspective view, with a third reinforcement member added.
FIG. 9 is a partial enlarged cross-sectional view taken along line IX-IX in FIG. 8.
FIG. 10 is a partial enlarged cross-sectional view taken along line X-X in FIG. 3.

### [Mode for Carrying Out the Invention]

The details of a lower structure for a vehicle according to the present invention will be described below for each embodiment with reference to attached drawings. In the description made hereinafter, unless otherwise specified, terms indicating directions, such as "front", "rear", "right", "left", "up", and "down", indicate respective directions of a vehicle body, with a forward traveling direction of the vehicle assumed as "front".

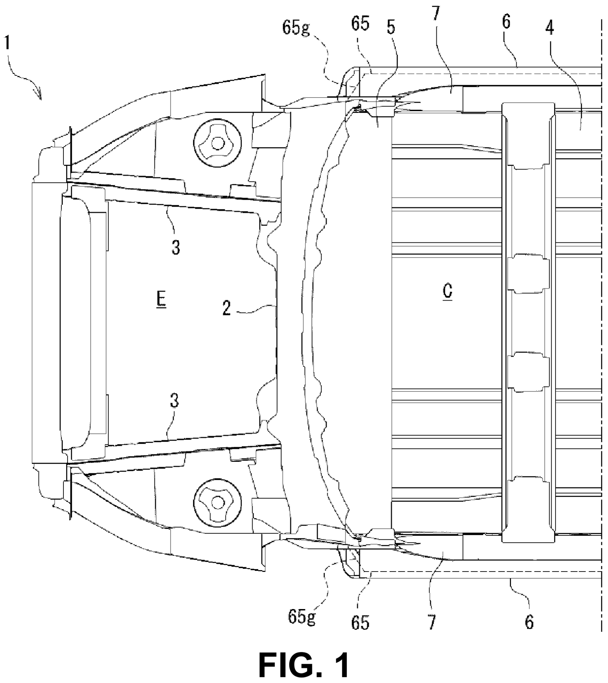

FIG. 1 is a plan view of an automobile 1 having the lower (side) structure for a vehicle according to the present embodiment, with outside panels and hinge pillar outer portions not illustrated. As shown in FIG. 1, the automobile 1 includes a dash panel 2, a pair of left and right front side frames 3, a floor panel 4, a toe board 5, a pair of left and right side sills 6, and a pair of left and right hinge pillars 7.

The dash panel 2 is a panel member that extends in a vehicle-body width direction to provide partitioning in a vehicle body front-rear direction between a vehicle cabin C and a drive source chamber E, in which a drive source, such as a motor, is disposed. The pair of left and right front side frames 3 extend in the vehicle body front-rear direction on both sides of the front part of the vehicle body in the vehicle-body width direction. The pair of left and right front side frames 3 extend forward from the dash panel 2. The drive source chamber E is provided between the pair of left and right front side frames 3.

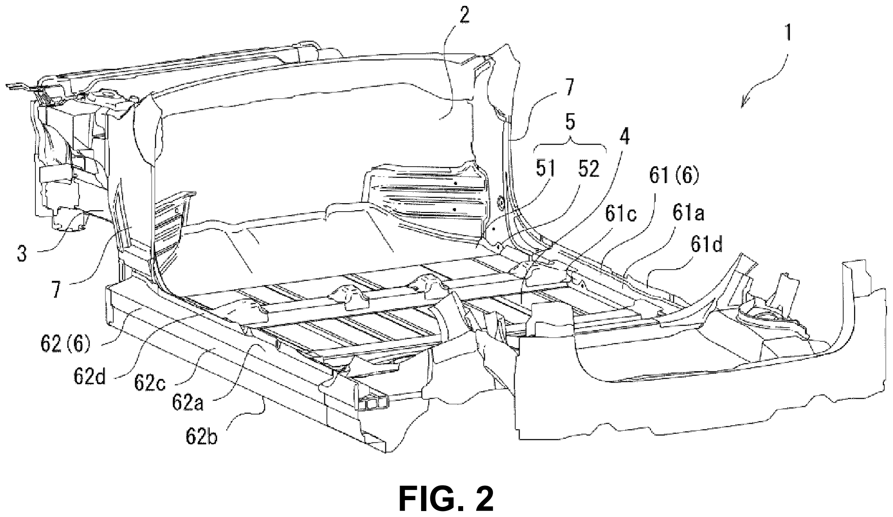

As shown in FIG. 2, the floor panel 4 is a member that forms the floor surface of a space in the vehicle cabin. The toe board 5 is provided so as to extend over the dash panel 2 and the floor panel 4. The toe board 5 is disposed to be inclined toward the upper side of the vehicle body as the toe board 5 extends toward the front side of the vehicle body. The rear end portion of the toe board 5 is joined to the front end of the floor panel 4 by welding, for example, and the front end portion of the toe board 5 is joined to the lower end portion of the dash panel 2 by welding, for example.

The toe board 5 includes a body portion 51 and flange portions 52, the body portion 51 extending in the vehicle-body width direction to form a floor surface located under the feet of an occupant, the flange portions 52 extending upward from both ends of the body portion 51 in the vehicle-body width direction. The flange portions 52 are joined to the pair of left and right hinge pillars 7 by welding, for example. In other words, the toe board 5 is provided on the cabin-side of the lower ends of the hinge pillars 7.

The hinge pillars 7 are disposed on both sides of the dash panel 2 in the vehicle-body width direction, and extend in an up-down direction to support the dash panel 2. The hinge pillars 7 are connected to the front ends of the side sills 6.

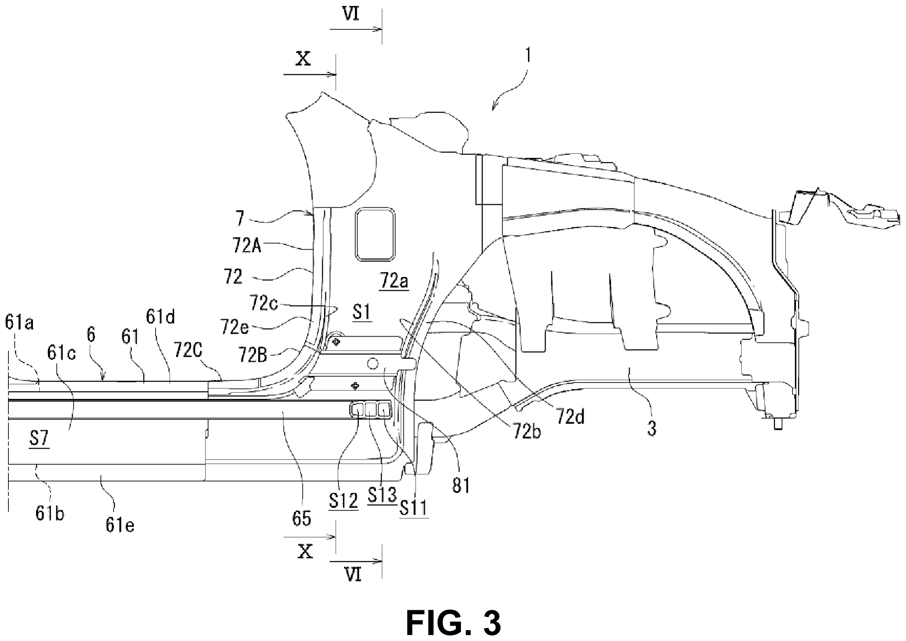

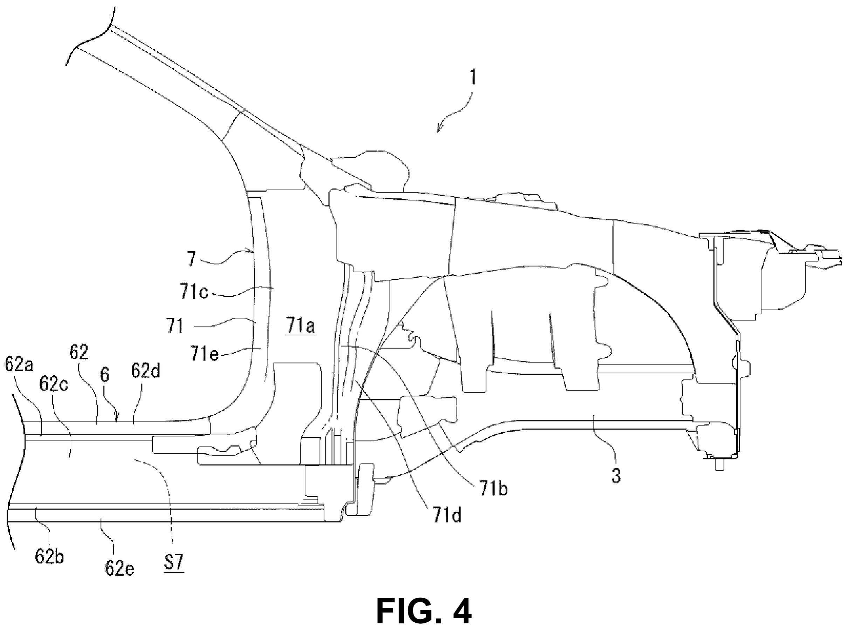

As shown in FIG. 3, each hinge pillar 7 includes a hinge pillar outer portion 71 having a hat shape in cross section (FIG. 4) and a hinge pillar inner portion 72 having a hat shape in cross section, the hinge pillar outer portion 71 being located on the outer side in the vehicle-body width direction, and being open toward the inner side in the vehicle-body width direction, the hinge pillar inner portion 72 being located on the inner side in the vehicle-body width direction, and being open toward the outer side in the vehicle-body width direction.

The hinge pillar inner portion 72 includes a side surface 72a, a front surface 72b, a rear surface 72c, a first flange portion 72d, and a second flange portion 72e, the side surface 72a forming the surface of the hinge pillar 7 on the inner side in the vehicle-body width direction, the front surface 72b forming the surface of the hinge pillar 7 on a side toward the front side of the vehicle body, the rear surface 72c forming the surface of the hinge pillar 7 on a side toward the rear side of the vehicle body, the first flange portion 72d being provided at the edge portion of the front surface 72b on the outer side in the vehicle-body width direction, the second flange portion 72e being provided at the edge portion of the rear surface 72c on the outer side in the vehicle-body width direction.

The hinge pillar inner portion 72 includes a body portion 72A, a bent portion 72B, and a rearward extension portion 72C, the body portion 72A being provided to extend in a vehicle body up-down direction, the bent portion 72B extending rearward and downward from the lower end portion of the body portion 72A while being bent, the rearward extension portion 72C extending from the rear end portion of the bent portion 72B toward the rear side of the vehicle body. The bent portion 72B and the rearward extension portion 72C form a connection part between the lower end portion of the hinge pillar 7 and the front end portion of the side sill 6. The rear end portion of the rearward extension portion 72C is joined to the front end portion of a side sill inner portion 61 described later.

The body portion 72A, the bent portion 72B, and the rearward extension portion 72C of the hinge pillar inner portion 72 are formed continuously as an integral piece. The side surface 72a, the front surface 72b, the rear surface 72c, the first flange portion 72d, and the second flange portion 72e, which form the hinge pillar inner portion 72, are continuously formed not only in the body portion 72A but also in the bent portion 72B and the rearward extension portion 72C. In each of the bent portion 72B and the rearward extension portion 72C, the front surface 72b forms the lower surface, and the rear surface 72c forms the upper surface.

FIG. 4 shows the automobile 1 with the outside panel and the hinge pillar outer portion 71 illustrated. As shown in FIG. 4, the hinge pillar outer portion 71 includes a side surface 71a, a front surface 71b, a rear surface 71c, a first flange portion 71d, and a second flange portion 71e, the side surface 71a forming the surface of the hinge pillar 7 on the outer side in the vehicle-body width direction, the front surface 71b forming the surface of the hinge pillar 7 on a side toward the front side of the vehicle body, the rear surface 71c forming the surface of the hinge pillar 7 on a side toward the rear side of the vehicle body, the first flange portion 71d being provided at the edge portion of the front surface 71b on the inner side in the vehicle-body width direction, the second flange portion 71e being provided at the edge portion of the rear surface 71c on the inner side in the vehicle-body width direction.

The hinge pillar outer portion 71 is disposed to face the outer side of the hinge pillar inner portion 72 in the vehicle-body width direction, and the hinge pillar outer portion 71 and the hinge pillar inner portion 72 are joined to each other by joining the first flange portions 71d, 72d together and by joining the second flange portions 71e, 72e together. Consequently, a closed cross-section S1 being continuous in the vehicle body up-down direction is formed between the hinge pillar outer portion 71 and the hinge pillar inner portion 72 (FIG. 3).

As shown in FIG. 3, a reinforcement member 81 is disposed in an inner space of the hinge pillar 7, the inner space being surrounded by the hinge pillar outer portion 71 and the hinge pillar inner portion 72. The reinforcement member 81 is disposed at the bent portion 72B at a position lower than the center of the hinge pillar 7 in a height direction. The position of at least a portion of the reinforcement member 81 in the up-down direction overlaps with that of the front side frame 3.

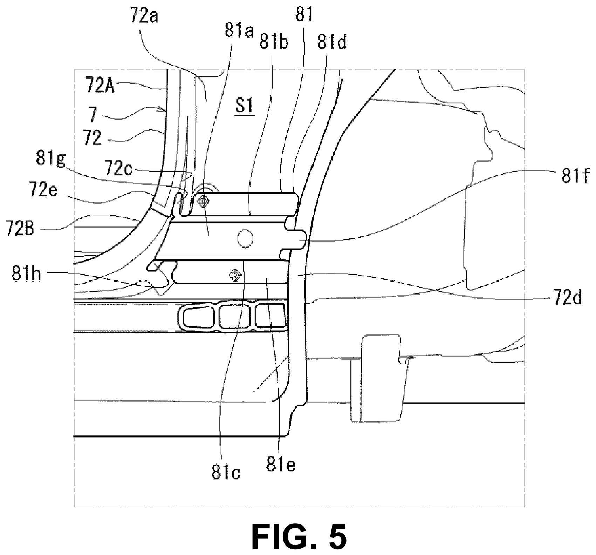

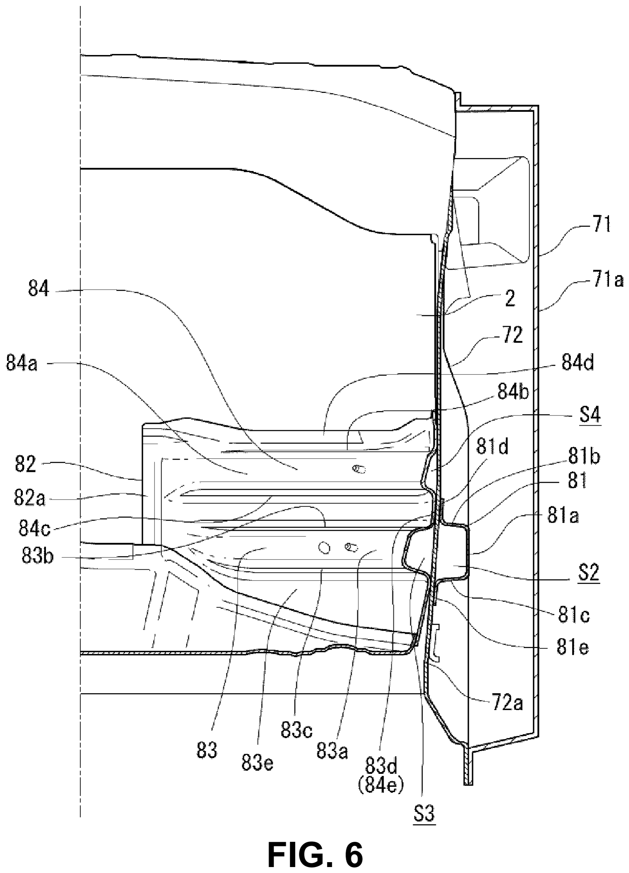

As shown in FIGS. 5 and 6, the reinforcement member 81 includes a side surface 81a, an upper surface 81b, a lower surface 81c, an upper flange portion 81d, and a lower flange portion 81e, the side surface 81a being disposed along the side surface 71a of the hinge pillar outer portion 71, the upper surface 81b extending inward in the vehicle-body width direction from the upper edge of the side surface 81a, the lower surface 81c extending inward in the vehicle-body width direction from the lower edge of the side surface 81a, the upper flange portion 81d extending upward from the inner end of the upper surface 81b, the lower flange portion 81e extending downward from the inner end of the lower surface 81c. The reinforcement member 81 as a whole has a hat-shaped cross sectional shape open toward the inner side in the width direction when viewed in the vehicle body front-rear direction. The upper flange portion 81d and the lower flange portion 81e are joined to the side surface 72a of the hinge pillar inner portion 72 by welding or the like, for example.

As shown in FIG. 5, a tongue portion 81f extending forward is provided at the front end of the side surface 81a of the reinforcement member 81. The tongue portion 81f is joined to the first flange portion 72d of the hinge pillar inner portion 72 by welding or the like, for example. An upper tongue portion 81g extending upward is provided at the rear end of the upper surface 81b of the reinforcement member 81. A lower tongue portion 81h extending rearward is provided at the rear end of the lower surface 81c. The upper tongue portion 81g and the lower tongue portion 81h are joined to the rear surface 72c of the bent portion 72B of the hinge pillar inner portion 72 by welding or the like, for example. In other words, the rear end of the reinforcement member 81 is fixed to the bent portion 72B.

Consequently, as shown in FIG. 6, a closed cross-section S2 being continuous in the vehicle body front-rear direction is formed between the hinge pillar inner portion 72 and the reinforcement member 81. In other words, the reinforcement member 81 forms the closed cross-section S2 extending in the vehicle body front-rear direction in cooperation with the hinge pillar inner portion 72 at the lower portion of the hinge pillar inner portion 72 on a side toward the outer side of the vehicle cabin.

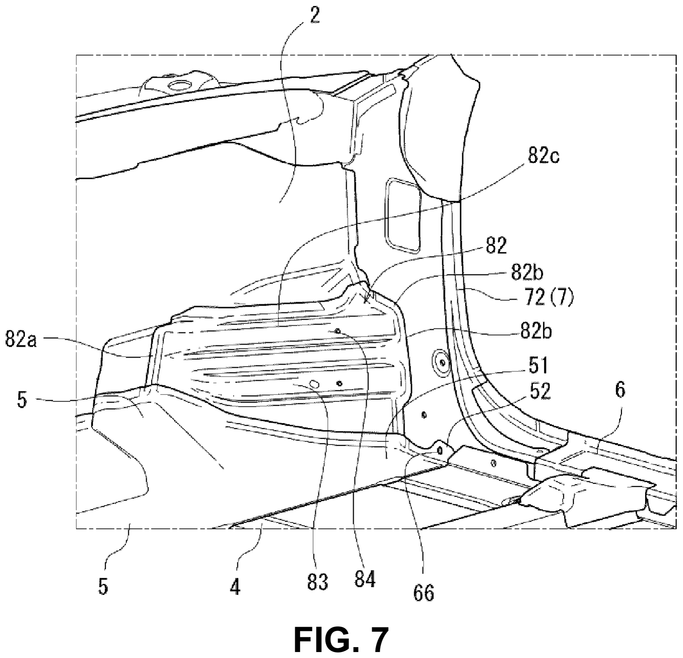

As shown in FIG. 7, a second reinforcement member 82 is provided at the hinge pillar 7 and the dash panel 2 on a side toward the inner side of the vehicle cabin (the inner side of the hinge pillar 7 in the vehicle-body width direction). The second reinforcement member 82 is provided to diagonally extend over the dash panel 2 and the hinge pillar inner portion 72. The position of at least a portion of the second reinforcement member 82 in the up-down direction overlaps with that of the reinforcement member 81 (FIG. 6).

The second reinforcement member 82 includes a front surface 82a, a side surface 82b, and a connection part 82c, the front surface 82a facing a side of the dash panel 2 toward the rear side of the vehicle body, the side surface 82b facing the inner side of the hinge pillar inner portion 72 in the vehicle-body width direction, the connection part 82c integrally connecting the front surface 82a to the side surface 82b.

The front surface 82a of the second reinforcement member 82 is provided to extend over the vicinity of the front end of the toe board 5 and the dash panel 2, and is joined to the dash panel 2 and the toe board 5 by welding, for example. The side surface 82b of the second reinforcement member 82 has a larger dimension in the vehicle body up-down direction than the front surface 82a. A side surface 82b is joined to the hinge pillar inner portion 72 by welding, for example.

The connection part 82c extends at an inclination so as to connect the side surface 82b to the front surface 82a. The connection part 82c is inclined outward in the vehicle-body width direction as the connection part 82c extends from the front surface 82a toward the rear side of the vehicle body. The connection part 82c includes two hat-shaped cross-sectional portions that are open toward the outside of the vehicle cabin. The two hat-shaped cross-sectional portions include a first hat portion 83, which is located on the lower side, and a second hat portion 84, which is located above the first hat portion 83.

More specifically, as shown in FIG. 6, the first hat portion 83 includes, at a portion that faces the hinge pillar inner portion 72, a side surface 83a, an upper surface 83b, a lower surface 83c, an upward extension portion 83d, and a downward extension portion 83e, the side surface 83a facing the inner side of the hinge pillar inner portion 72 in the vehicle-body width direction with a gap therebetween, the upper surface 83b extending outward in the vehicle-body width direction from the upper edge portion of the side surface 83a, the lower surface 83c extending outward in the vehicle-body width direction from the lower edge portion of the side surface 83a, the upward extension portion 83d extending upward from the outer end portion of the upper surface 83b, the downward extension portion 83e extending downward from the outer end portion of the lower surface 83c.

The second hat portion 84 includes, at a portion that faces the hinge pillar inner portion 72, a side surface 84a, an upper surface 84b, a lower surface 84c, an upward extension portion 84d, and a downward extension portion 84e, the side surface 84a facing the inner side of the hinge pillar inner portion 72 in the vehicle-body width direction with a gap therebetween, the upper surface 84b extending outward in the vehicle-body width direction from the upper edge portion of the side surface 84a, the lower surface 84c extending outward in the vehicle-body width direction from the lower edge portion of the side surface 84a, the upward extension portion 84d extending upward from the outer end portion of the upper surface 84b, the downward extension portion 84e extending downward from the outer end portion of the lower surface 84c. In the present embodiment, the downward extension portion 84e of the second hat portion 84 is formed of the upward extension portion 83d of the first hat portion 83.

The connection part 82c is joined to the hinge pillar inner portion 72 at the upward extension portions 83d, 84d and the downward extension portions 83e, 84e of the first hat portion 83 and the second hat portion 84 by welding or the like. Consequently, a second closed cross-section S3 and a third closed cross-section S4 are formed between the first hat portion 83/the second hat portion 84 and the hinge pillar inner portion 72. In other words, the second reinforcement member 82 forms the second closed cross-section S3 and the third closed cross-section S4 both extending in the vehicle body front-rear direction in cooperation with the hinge pillar inner portion 72. The position of the second closed cross-section S3 in the up-down direction overlaps with that of the closed cross-section S2 of the reinforcement member 81. The third closed cross-section S4 is located at a position higher than the second closed cross-section S3.

In each of the first hat portion 83 and the second hat portion 84, the portion that faces the hinge pillar inner portion 72 is continuous with the portion that faces the dash panel 2, thereby forming an integral piece. The portion of each of the first hat portion 83 and the second hat portion 84 that faces the hinge pillar inner portion 72 is continuously formed with the portion that faces the dash panel 2.

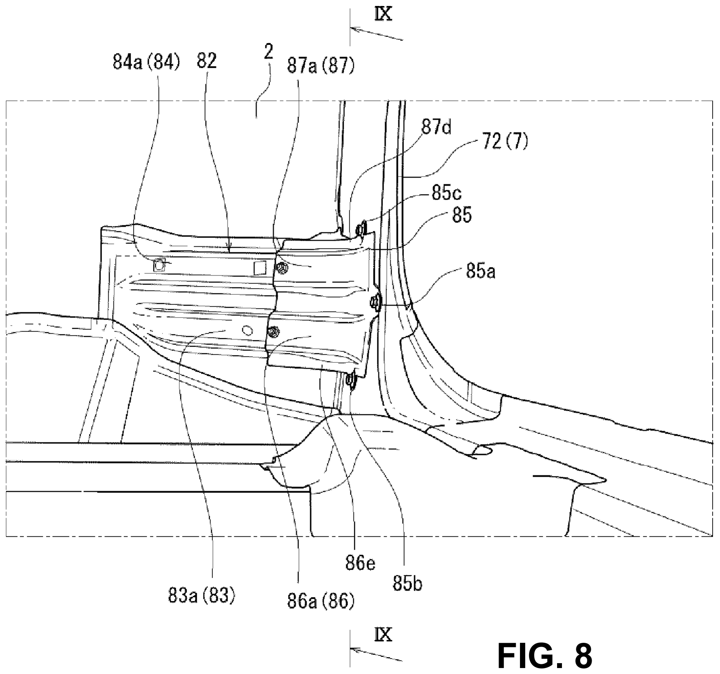

As shown in FIG. 8, a third reinforcement member 85 is further provided on the inner side of the hinge pillar 7 in the vehicle-body width direction. The third reinforcement member 85 is provided so as to extend over the second reinforcement member 82 and the hinge pillar inner portion 72.

The third reinforcement member 85 includes a third hat portion 86 and a fourth hat portion 87 that respectively correspond to the first hat portion 83 and the second hat portion 84 of the second reinforcement member 82. The third hat portion 86 is overlapped with the first hat portion 83 from the inner side in the vehicle-body width direction, and the fourth hat portion 87 is overlapped with the second hat portion 84 from the inner side in the vehicle-body width direction.

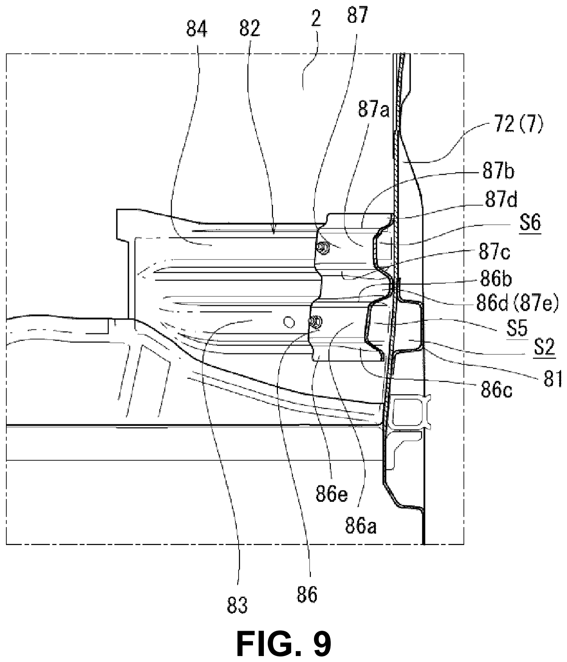

More specifically, as shown in FIG. 9, the third hat portion 86 includes a side surface 86a, an upper surface 86b, a lower surface 86c, an upward extension portion 86d, and a downward extension portion 86e, the side surface 86a facing the inner side of the hinge pillar inner portion 72 in the vehicle-body width direction with a gap therebetween, the upper surface 86b extending outward in the vehicle-body width direction from the upper edge portion of the side surface 86a, the lower surface 86c extending outward in the vehicle-body width direction from the lower edge portion of the side surface 86a, the upward extension portion 86d extending upward from the outer end portion of the upper surface 86b, the downward extension portion 86e extending downward from the outer end portion of the lower surface 86c.

The fourth hat portion 87 includes a side surface 87a, an upper surface 87b, a lower surface 87c, an upward extension portion 87d, and a downward extension portion 87e, the side surface 87a facing the inner side of the hinge pillar inner portion 72 in the vehicle-body width direction with a gap therebetween, the upper surface 87b extending outward in the vehicle-body width direction from the upper edge portion of the side surface 87a, the lower surface 87c extending outward in the vehicle-body width direction from the lower edge portion of the side surface 87a, the upward extension portion 87d extending upward from the outer end portion of the upper surface 87b, the downward extension portion 87e extending downward from the outer end portion of the lower surface 87c. In the present embodiment, the downward extension portion 87e of the fourth hat portion 87 is formed of the upward extension portion 86d of the third hat portion 86.

As shown in FIG. 8, the third reinforcement member 85 is fastened to the hinge pillar inner portion 72 with bolts or the like at a rear flange portion 85a, a lower flange portion 85b, and an upper flange portion 85c, the rear flange portion 85a extending rearward from the rear end portion, the lower flange portion 85b extending downward from the downward extension portion 86e of the third hat portion 86, the upper flange portion 85c extending upward from the upward extension portion 87d of the fourth hat portion 87. The third reinforcement member 85 is fastened to the side surfaces 83a, 84a of the first hat portion 83 and the second hat portion 84 with bolts or the like at the rear end portions of the side surfaces 86a, 87a of the third hat portion 86 and the fourth hat portion 87.

Consequently, as shown in FIG. 9, a fourth closed cross-section S5 and a fifth closed cross-section S6 are formed between the third hat portion 86/the fourth hat portion 87 and the hinge pillar inner portion 72. In other words, the third reinforcement member 85 forms the fourth closed cross-section S5 and the fifth closed cross-section S6 in cooperation with the hinge pillar inner portion 72, the fourth closed cross-section S5 and the fifth closed cross-section S6 extending in the vehicle body front-rear direction. The position of the fourth closed cross-section S5 in the up-down direction overlaps with that of the closed cross-section S2 of the reinforcement member 81. The fifth closed cross-section S6 is located at a position higher than the second and fourth closed cross-sections S3, S5.

The second reinforcement member 82 and the third reinforcement member 85 form the closed cross-sections S3, S4, S5, S6 on the hinge pillar inner portion 72, the closed cross-sections S3, S4, S5, S6 extending in the front-rear direction substantially over the entire region of the hinge pillar inner portion 72 in the front-rear direction.

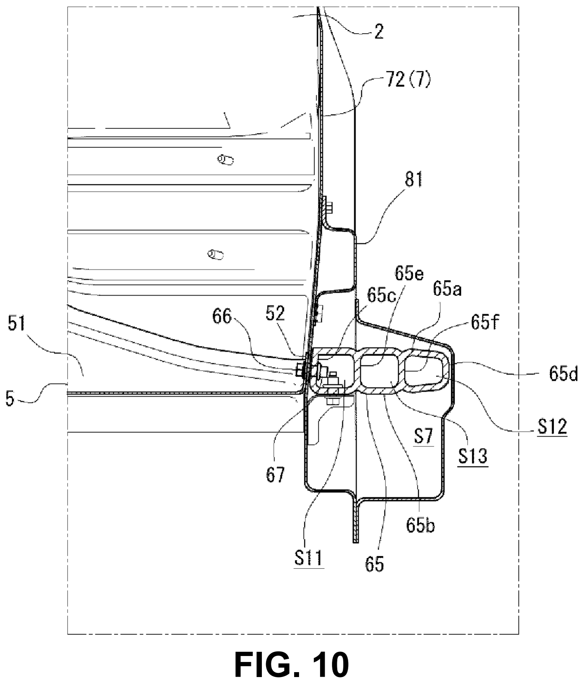

As shown in FIG. 2, the side sills 6 are provided to extend in the vehicle body front-rear direction along the end portions of the floor panel 4 in the vehicle-body width direction. Each side sill 6 is formed by welding a plurality of plate members, for example. In the present embodiment, the side sill 6 includes the side sill inner portion 61 and a side sill outer portion 62, the side sill inner portion 61 being located on the inner side in the vehicle-body width direction, the side sill outer portion 62 being located on the outer side in the vehicle-body width direction. The side sill 6 has a closed cross-section formed by the side sill inner portion 61 and the side sill outer portion 62, and extending in the front-rear direction (FIG. 10).

More specifically, as shown in FIG. 3, the side sill inner portion 61 includes an inner upper wall portion 61a, an inner lower wall portion 61b, an inner wall portion 61c, and upper and lower flanges 61d, 61e, the inner upper wall portion 61a extending in the vehicle-body width direction, the inner lower wall portion 61b facing the inner upper wall portion 61a and extending in the vehicle-body width direction, the inner wall portion 61c connecting the inner ends of the inner upper wall portion 61a and the inner lower wall portion 61b, the upper and lower flanges 61d, 61e extending in the up-down direction from the outer end of the inner upper wall portion 61a and the outer end of the inner lower wall portion 61b. The side sill inner portion 61 has a hat shape projecting inward in the vehicle-body width direction in a cross section orthogonal to the extending direction.

As shown in FIG. 4, the side sill outer portion 62 includes an outer upper wall portion 62a, an outer lower wall portion 62b, an outer wall portion 62c, and upper and lower flanges 62e, 62f, the outer upper wall portion 62a extending in the vehicle-body width direction, the outer lower wall portion 62b facing the outer upper wall portion 62a and extending in the vehicle-body width direction, the outer wall portion 62c connecting the outer ends of the outer upper wall portion 62a and the outer lower wall portion 62b, the upper and lower flanges 62e, 62f extending in the up-down direction from the inner end of the outer upper wall portion 62a and the inner end of the outer lower wall portion 62b. The side sill outer portion 62 has a hat shape projecting outward in the vehicle-body width direction in a cross section orthogonal to the extending direction.

The upper flanges 61e, 62e of the side sill inner portion 61 and the side sill outer portion 62 are joined in the vehicle-body width direction by welding or the like, for example, and the lower flanges 61f, 62f of the side sill inner portion 61 and the side sill outer portion 62 are joined in the vehicle-body width direction by welding or the like, for example, thereby forming the side sill 6 having a closed cross-section S7 having a substantially rectangular shape in cross section.

Referring to FIG. 3, a reinforcement 65 is disposed in each side sill 6. The reinforcement 65 is an extruded member made of aluminum or the like, for example. The reinforcement 65 extends in the vehicle body front-rear direction along the side sill 6. The reinforcement 65 extends from the rear end of the side sill 6 (FIG. 2) to the vicinity of the front end of the hinge pillar 7. More specifically, the reinforcement 65 extends forward beyond the center of the hinge pillar 7 in the vehicle body front-rear direction. The front end of the reinforcement 65 is disposed adjacent to the front surface 72b of the hinge pillar inner portion 72. The reinforcement 65 is fixed to the side sill inner portion 61 by fastening members 66, such as bolts, at a plurality of positions in the front-rear direction.

A front end portion 65g of the reinforcement 65 is inclined rearward as the front end portion 65g extends from the inner side in the vehicle-body width direction toward the outer side in the vehicle-body width direction, when viewed in a plan view (shown by a broken line in FIG. 1). The reinforcement 65 has a plurality of closed cross-sections S11, S12, S13 arranged adjacent to each other in the vehicle-body width direction.

More specifically, as shown in FIG. 10, the reinforcement 65 includes an upper wall 65a, a lower wall 65b, an inner wall 65c, an outer wall 65d, a first vertical wall 65e, and a second vertical wall 65f, the upper wall 65a and the lower wall 65b facing each other in the up-down direction and extending in the horizontal direction, the inner wall 65c and the outer wall 65d facing each other in the vehicle-body width direction and extending in the vertical direction, the first vertical wall 65e and the second vertical wall 65f extending in the vertical direction between the inner wall 65c and the outer wall 65d. The plurality of closed cross-sections S11, S12, S13 include the inner closed cross-section S11 located on the inner side in the vehicle-body width direction, the outer closed cross-section S12 located on the outer side in the vehicle-body width direction, and the intermediate closed cross-section S13 located between the inner closed cross-section S11 and the outer closed cross-section S12.

As shown in FIG. 7 and FIG. 10, the reinforcement 65 is fastened to the hinge pillar 7 via the fastening member 66 at the front end portion of the reinforcement 65. The fastening member 66 fastens the toe board 5, the hinge pillar 7, and the reinforcement 65 together.

Further, in the embodiment, the lower wall 65b of the inner closed cross-section S11 of the reinforcement 65 is fixed to the hinge pillar 7 via a bracket. In particular, one arm of the bracket for fixing the lower wall 65b of the inner closed cross-section S11 of the reinforcement 65 to the hinge pillar 7 is spot-welded to the hinge pillar inner portion 72, while the other arm is fixed to the lower wall 65b of the inner closed cross-section S11 of the reinforcement 65 by a fastening member screwed into a blind nut provided in the inner closed cross-section S11.

Regarding the fastening member 66 fastening the toe board 5, the hinge pillar 7, and the reinforcement 65 together, more specifically, as shown in FIG. 10, a blind nut 67 protruding toward the inside of the inner closed cross-section S11 is fixed to the inner wall 65c of the reinforcement 65. Each of the flange portion 52 of the toe board 5 and the hinge pillar inner portion 72 has a fastening hole at a position that corresponds to the blind nut 67. The fastening member 66 is inserted into the fastening holes from a side toward the inside of the vehicle cabin C (the side of the flange portion 52 of the toe board 5), and is screwed into the blind nut 67, thereby fixing the reinforcement 65 in the hinge pillar 7.

In other words, the fastening member 66 is inserted into the closed cross-section (inner closed cross-section) S11 located at the inner end in the vehicle-body width direction. The flange portion 52, the hinge pillar inner portion 72, and the reinforcement 65 are fastened together by the fastening member 66 (the three components are fastened together). In this Description, the blind nut 67 is a fixing nut of a type that is fixed by forming a prepared hole and then swaging the nut with a dedicated tool, for use with an aluminum panel, a thin iron plate, or the like, in which tapping is difficult or welding cannot be applied, for example. FIG. 10 describes a configuration in which the front end portion of the reinforcement 65 is fixed to the hinge pillar inner portion 72. However, in addition to the front end portion of the reinforcement 65, the reinforcement 65 is fixed in the side sill inner portion 61 by blind nuts and fastening members also at other portions that are fixed to the side sill inner portion 61.

The lower vehicle-body structure for a vehicle according to the above-mentioned embodiment can provide the following operational effects.

The lower vehicle-body structure for a vehicle 1 includes: the floor panel 4; the side sills 6 extending in the vehicle body front-rear direction at both ends of the floor panel 4 in the vehicle-body width direction; the hinge pillars 7 connected to the side sills 6, and extending in the up-down direction at the front ends of the side sills 6; and the reinforcements 65 extending in the vehicle body front-rear direction in the side sills 6, and fastened to the hinge pillars 7 via the fastening members 66.

With this configuration, since each reinforcement 65 is fastened to the hinge pillar 7, an impact load input to the hinge pillar 7 in a SORB test or the like can be transmitted to the side sill 6 via the reinforcement 65 and the fastening member 66. As a result, the impact load input to the hinge pillar 7 can be distributed to the reinforcement 65, the fastening member 66, and the side sill 6, thereby suppressing deformation of the vehicle cabin interior that may be caused by rearward movement of the hinge pillar 7.

The lower vehicle-body structure for the vehicle 1 further includes the toe board 5 connected to the front end of the floor panel 4, and provided in the vehicle cabin C at the lower ends of the hinge pillars 7, and the fastening member 66 fastens the toe board 5, the hinge pillar 7, and the reinforcement 65 together.

With this configuration, the toe board 5, the hinge pillar 7, and the reinforcement 65 are fastened together by the fastening member 66, so that an impact load input to the hinge pillar 7 can also be received by the toe board 5 and hence, the rearward movement of the hinge pillar 7 is suppressed also by the toe board 5.

The reinforcement 65 has the plurality of closed cross-sections S11, S12, S13 arranged adjacent to each other in the vehicle-body width direction.

With this configuration, it is possible to increase the rigidity of the reinforcement 65 compared with a case in which the reinforcement 65 has one closed cross-section.

The fastening member 66 is inserted into the inner closed cross-section S11 that is located at the inner end of the plurality of closed cross-sections S11, S12, S13 in the vehicle-body width direction.

With this configuration, the fastening member 66 is inserted into the inner closed cross-section S11 located on the inner side in the vehicle-body width direction, and therefore can be easily connected to the hinge pillar 7 and the toe board 5.

The reinforcement 65 extends to the vicinity of the front end portion of the hinge pillar 7.

With this configuration, an impact load input to the hinge pillar 7 from the front side of the vehicle body can be more effectively transmitted to the reinforcement 65.

The toe board 5 includes the body portion 51 extending in the vehicle-body width direction, and the flange portions 52 extending upward from both ends of the body portion 51 in the vehicle-body width direction. The toe board 5 is connected to the hinge pillars 7 at the flange portions 52.

This configuration is a specific structure for connecting the toe board 5 to the hinge pillars 7.

The hinge pillar 7 includes the hinge pillar inner portion 72 located on the inner side in the vehicle-body width direction, and the hinge pillar outer portion 71 located on the outer side in the vehicle-body width direction. The fastening member 66 fastens the flange portion 52, the hinge pillar inner portion 72, and the reinforcement 65 together.

With this configuration, an impact load input to the hinge pillar 7 from the front side of the vehicle body can be more effectively received by the reinforcement 65.

The front end portion 65e of each reinforcement 65 is inclined rearward as the front end portion 65g extends from the inner side in the vehicle-body width direction toward the outer side in the vehicle-body width direction, when viewed in a plan view.

With this configuration, when a tire moving rearward in a SORB test or the like comes into contact with the front end portion 65g of the reinforcement 65, the tire is guided outward in the vehicle-body width direction, thereby suppressing deformation of the vehicle cabin C that may be caused by the rearward movement of the tire.

In the present embodiment, the description has been made for a configuration in which the reinforcement 65 is an extruded member made of aluminum. However, the configuration is not limitative. For example, the reinforcement 65 may be a pressed product, a roll formed product, or the like that is made of iron.

In the present embodiment, the description has been made for a configuration in which the reinforcement 65 is fixed to the hinge pillar inner portion 72 and/or the side sill inner portion 61 by the fastening member 66 and the blind nut 67. However, the configuration is not limitative. For example, the fastening member 66 may be fastened to a weld nut or the like provided on the reinforcement 65.

In the present embodiment, the description has been made for a configuration in which the reinforcement 65 has the plurality of closed cross-sections S11, S12, S13. However, the configuration is not limitative. The reinforcement 65 may have one closed cross-section.

In the present embodiment, the description has been made for a configuration in which the front end portion 65g of each reinforcement 65 is inclined outward in the width direction as the front end portion 65e extends toward the rear side of the vehicle body. However, the configuration is not limitative. The front end portion of each reinforcement 65 may be parallel to the vehicle-body width direction.

In the present embodiment, the description has been made for a configuration in which the reinforcement 65 extends to the vicinity of the front end of the hinge pillar inner portion 72. However, the configuration is not limitative. It is sufficient that the reinforcement 65 be fastened to the hinge pillar inner portion 72.

In the present embodiment, the description has been made for a configuration in which three components, that is, the toe board 5, the hinge pillar inner portion 72, and the reinforcement 65, are fastened together. However, the configuration is not limitative. Each of the toe board 5, the hinge pillar inner portion 72, and the hinge pillar inner portion 72 may be individually fastened to the reinforcement 65.

The present invention is not limited to the configurations described in the embodiment, and various modifications are conceivable.

### [Reference Signs List]

- 1: automobile (vehicle)
- 4: floor panel
- 5: toe board
- 6: side sill
- 7: hinge pillar
- 51: body portion
- 52: flange portion
- 65: reinforcement
- 65e: front end portion
- 66: fastening member
- 71: hinge pillar outer portion
- 72: hinge pillar inner portion
- C: vehicle cabin
- S11: closed cross-section (inner closed cross-section)
- S12: closed cross-section
- S13: closed cross-section

## Claims

1. A lower vehicle-body structure for a vehicle, the lower vehicle-body structure comprising:
a floor panel (4);
side sills (6) extending in a vehicle body front-rear direction at both ends of the floor panel (4) in a vehicle-body width direction;
hinge pillars (7) connected to the side sills (6), and extending in an up-down direction at front ends of the side sills (6); and
a reinforcement (65) extending in the vehicle body front-rear direction in each of the side sills (6), and fastened to each of the hinge pillars (7) via a fastening member (66).

2. The lower vehicle-body structure for a vehicle according to claim 1, further comprising
a toe board (5) connected to a front end of the floor panel (4), and provided in a vehicle cabin at lower ends of the hinge pillars (7), wherein
the fastening member (66) fastens the toe board (5), the hinge pillar (7), and the reinforcement (65) together.

3. The lower vehicle-body structure for a vehicle according to claim 1 or 2, wherein
the reinforcement (65) has a plurality of closed cross-sections (S11, S12, S13) arranged adjacent to each other in the vehicle-body width direction.

4. The lower vehicle-body structure for a vehicle according to claim 3, wherein
the fastening member (66) is inserted into an inner closed cross-section (S11) that is located at an inner end of the plurality of closed cross-sections (S11, S12, S13) in the vehicle-body width direction.

5. The lower vehicle-body structure for a vehicle according to any one of the preceding claims, wherein
the reinforcement (65) extends to a vicinity of a front end portion of the hinge pillar (7).

6. The lower vehicle-body structure for a vehicle according to claim 2, wherein
the toe board (5) includes a body portion (51) extending in the vehicle-body width direction, and flange portions (52) extending upward from both ends of the body portion (51) in the vehicle-body width direction, and
the toe board (5) is connected to the hinge pillars (7) at the flange portions (52).

7. The lower vehicle-body structure for a vehicle according to claim 6, wherein
the hinge pillar (7) includes a hinge pillar inner portion (72) located on an inner side in the vehicle-body width direction and a hinge pillar outer portion (71) located on an outer side in the vehicle-body width direction, and
the fastening member (66) fastens a flange portion (52) of the flange portions, the hinge pillar inner portion, and the reinforcement (65) together.

8. The lower vehicle-body structure for a vehicle according to any one of the preceding claims, wherein
a front end portion of the reinforcement (65) is inclined rearward as the front end portion extends from an inner side in the vehicle-body width direction toward an outer side in the vehicle-body width direction, when viewed in a plan view.

9. The lower vehicle-body structure for a vehicle according to any one of the preceding claims, wherein the reinforcement (65) is fixed to a side sill inner portion (61) at a plurality of positions in the vehicle front-rear direction.

10. The lower vehicle-body structure for a vehicle according to claim 9, wherein
an inner wall (65c) of the reinforcement (65) is fixed to the a side sill inner portion (61) by fastening members.

11. The lower vehicle-body structure for a vehicle according to any one of the preceding claims, wherein a lower wall (65b) of the reinforcement (65) is fixed to the hinge pillar (7) via a bracket.

12. The lower vehicle-body structure for a vehicle according to claim 11, wherein
one arm of the bracket is welded to a hinge pillar inner portion (72), while the other arm is fixed to the lower wall (65b) of the inner closed cross-section (S11) of the reinforcement (65) by a fastening member.

13. The lower vehicle-body structure for a vehicle according to any one of the preceding claims, wherein a reinforcement member (81) is disposed in an inner space of the hinge pillar (7), the inner space being surrounded by a hinge pillar outer portion (71) and a hinge pillar inner portion (72),
wherein the reinforcement member (81) has a hat-shaped cross sectional shape open towards the inner side in the vehicle width direction when viewed in the vehicle body front-rear direction, with an upper flange portion (81d) and a lower flange portion (81e) being joined to the hinge pillar inner portion (72),
the reinforcement member (81) extending in the vehicle front-rear direction at a position above the reinforcement (65) inside the hinge pillar (7).

14. The lower vehicle-body structure for a vehicle according to any one of the preceding claims, wherein
the reinforcement (65) has a uniform cross sectional shape over its entire length in the front-rear direction
and/or
the reinforcement (65) is an extruded member
and/or
the reinforcement (65) extends in the vehicle front-rear direction and has a closed cross-sectional shape in a vehicle width direction,
and/or
the reinforcement (65) is spaced apart from the side sill and/or the hinge pillar (7) except for an inner wall (65c), which is in contact with the side sill and/or a hinge pillar inner portion (72).

15. A vehicle comprising a lower vehicle-body structure according to any one of the preceding claims.
